# EUROPÄISCHE PATENTSCHRIFT

(11) **EP 0 878 224 B1**
(45) Veröffentlichungstag und Bekanntmachung des Hinweises auf die Patenterteilung: **20.08.2003**
(21) Anmeldenummer: 98108199.5
(22) Anmeldetag: 06.05.1998
(51) Int. Cl.: B01D 19/04

(54) **Entschäumercompounds zur Entschäumung von Polymerdispersionen und wässrigen Lacksystemen**
Defoaming compositions for polymer dispersions and aqueous coating compositions
Compositions antimousse pour le démoussage de dispersions de polymères et de compositions de revêtement aqueuses

(30) Priorität: 17.05.1997 DE 19720870
(43) Veröffentlichungstag der Anmeldung: 18.11.1998
(73) Patentinhaber: Goldschmidt AG, 45127 Essen (DE)
(72) Erfinder: Grüning, Burghard, Dr., 45134 Essen (DE); Hinrichs, Petra, 44866 Bochum (DE); Keup, Michael, Dr., 45130 Essen (DE); König, Frank, 45884 Gelsenkirchen (DE); Silber, Stefan, Dr., 47804 Krefeld (DE); Sucker, Roland, 59368 Werne (DE); Wallhorn, Ellen, 45239 Essen (DE)

(56) Entgegenhaltungen:
- WO-A-96/25215
- DE-A- 3 001 387
- DE-A- 3 636 086
- US-A- 3 337 595
- US-A- 5 326 499
- DATABASE WPI Section Ch, Week 9740 Derwent Publications Ltd., London, GB; Class A25, AN 97-426035 XP002076506 & CN 1 115 261 A (ZHU J)

## Beschreibung

Die Erfindung betrifft Entschäumercompounds aus alkoxylierten Partialestern von durch Kondensation von 2 bis 20 Glycerinmolekülen erhältlichen Oligoglycerinen mit C₈- bis C₂₂-Fettsäuren und anorganischen oder organischen Feststoffen zur Entschäumung von Polymerdispersionen und wäßrigen Lacksystemen.

In vielen technischen Prozessen werden grenzflächenaktive Substanzen zur Erzielung bestimmter Effekte gezielt eingesetzt. So benötigen wäßrige Anstrichstoffe eine Reihe von Hilfsstoffen, wie z. B. Emulgatoren zur Emulgierung der wasserunlöslichen Bindemittel oder auch Additive zur besseren Substratbenetzung und Pigmentdispergierung. Als unerwünschte Begleiterscheinung bewirken diese oberflächenaktiven Substanzen aber, daß die bei der Herstellung oder bei der Applikation eingebrachte Luft in Form von Schaum stabilisiert wird.

Die Verwendung von Siliconölen, insbesondere Dimethylpolysiloxanen niedriger bis mittlerer Viskosität, für die Entschäumung wäßriger Lösungen oder Dispersionen ist bekannt und beispielsweise in dem Buch W.Noll "Chemie und Technologie der Silicone" beschrieben. Zur Verbesserung der entschäumenden Wirkung von mineralölbasierenden und/oder siliciumorganischen Entschäumern werden häufig hochdisperse anorganische oder organische Substanzen, insbesondere in der Regel pyrogen erzeugte Kieselsäuren, zugesetzt (DE-C-10 67 003, DE-A-19 14 684). Es ist ebenfalls bekannt, Polyoxyalkylen-Polysiloxan-Copolymerisate als Entschäumungsmittel zu verwenden (US-A-3 763 021).

Diese aus dem Stand der Technik bekannten Siliconöle oder Polyoxyalkylen-Polysiloxan-Copolymerisate enthaltenden Zubereitungen sind in mehr oder weniger ausgeprägtem Umfang geeignet, die Schaumbildung von Polymerdispersionen oder wäßrigen Lacksystemen zu verhindern oder bereits gebildeten Schaum zu zerstören. Es hat sich jedoch gezeigt, daß mit derartigen Zubereitungen versetzte, wäßrige Lacksysteme, welche auf den Zusatz dieser Entschäumungsmittel zurückzuführen sind.

Es hat sich insbesondere gezeigt, daß Hochglanzdispersionsfarben, welchen zur Entschäumung Polysiloxane, Polyoxyalkylen-Polysiloxan-Copolymerisate oder mineralölbasierende Formulierungen zugesetzt worden sind, beim Aufbringen auf Oberflächen vielfältige Benetzungsfehler sowie reduzierten Glanz aufweisen. Diese Fehler zeigen sich in ungleichmäßiger Benetzung des Untergrundes und führen zur Ausbildung von Beschichtungen ungleichmäßiger Dicke und im Extremfall zu Beschichtungen, welche Fehlstellen unterschiedlichen Ausmaßes aufweisen.

Zudem provoziert der Einsatz von siliconbasierenden Produkten in wäßrigen Lacksystemen vielfach Zwischenlagenhaftungsprobleme, beim Einsatz in Tauchbecken können Krater über einen längeren Zeitraum nur schwer vermieden werden, und in Applikationsprozessen, denen eine katalytische Nachverbrennung nachgeschaltet ist, wird die Standzeit der Katalysatoren reduziert.

Auch der Gebrauch mineralölbasierender Produkte ist in vielen Fällen nicht opportun. Neben den physiologischen und ökologischen Risiken reduzieren diese Trägeröle beispielsweise in wäßrigen Medien den Glanzgrad von Dispersionslacken oder führen in Flexodruckfarben zu einem unerwünschten Anquellen der Flexoplatten.

In der DE-A-36 36 086 sind Fettsäureester von Polyglycerinpolyglycolethern beschrieben, die man dadurch erhält, daß man Polyglycerine in an sich bekannter Weise mit Ethylenoxid und Propylenoxid umsetzt und das erhaltene Alkylenoxidanlagerungsprodukt mit Fettsäuren verestert, wobei man 2 bis 15 Mol Ethylenoxid, 10 bis 60 Mol Propylenoxid und 1 bis 3 Mol Fettsäure pro Mol in Polyglycerin vorhandener Hydroxylgruppen einsetzt. In wäßrigen Lacksystemen sind deren schaumverhütende Eigenschaften jedoch unzureichend, insbesondere kann eine notwendige Langzeitwirkung in der Farbe nicht erreicht werden.

Der vorliegenden Erfindung liegt daher die Aufgabe zugrunde, geeignete silicon- und mineralölfreie Entschäumerformulierungen aufzufinden, welche in Polymerdispersionen und diese enthaltenden wäßrigen Lacksystemen gute entschäumende Wirkung zeigen, diesen Effekt über längere Zeit beibehalten, gleichzeitig aber die zuvor beschriebenen Probleme vermeiden.

Diese der Erfindung zugrunde liegende Aufgabe wird überraschenderweise gelöst durch die Verwendung von alkoxylierten Partialestern von durch Kondensation von 2 bis 20 Glycerinmolekülen erhältlichen Oligoglycerinen mit C₈- bis C₂₂-Fettsäuren und daraus hergestellten Compounds, wobei man 3 bis 60 Mol Propylenoxid und bevorzugt 1 bis 10 Mol Styroloxid und/oder 1 bis 10 Mol Butylenoxid einsetzt.

Entscheidend für die Verwendbarkeit als Entschäumer in waßrigen Lacksystemen ist das Vermeiden hydrophiler Polyethylenoxidsegmente sowie die Compoundierung mit organischen und/oder anorganischen, vorzugsweise hydrophoben Feststoffen.

Partialester von durch Kondensation von 2 bis 20 Glycerinmolekülen erhältlichen Oligoglycerinen mit Fettsäuren sind bekannt (DE-C-25 11 807). Diese Partialester werden häufig als innere Gleitmittel und/oder antistatische Kunststoffadditive eingesetzt. Auch die Verwendung als Dispergieradditiv in wäßrigen Lackdispersionen ist bereits beschrieben (EP-B-0 479 819).

Die erfindungsgemäß einzusetzenden Partialester werden aus durch Kondensation von 2 bis 20 Glycerinmolekülen erhältlichen Oligoglycerinen als Alkoholkomponente hergestellt, wobei Oligoglycerine, die formal aus 2 bis 10, insbesondere aus 4 bis 6 Glycerineinheiten aufgebaut sind, zur Herstellung der Partialester bevorzugt sind. Es können auch technische Mischungen der Oligoglycerine mit den angegebenen Kettenlängen eingesetzt werden. Für die Herstellung der Partialester eignen sich auch auf anderen Wegen erhältliche Oligoglycerine.

Solche Oligoglycerine werden zur Herstellung der erfindungsgemäß einzusetzenden Partialester mit C₈- bis C₂₂-Fettsäuren teilweise verestert, wobei vorzugsweise ein bis zwei Hydroxygruppen im Oligoglycerinteil unmodifiziert bleiben. Exemplarisch für C₈- bis C₂₂-Fettsäuren seien genannt Caprylsäure, Caprinsäure, Laurylsäure, Myristinsäure, Palmitinsäure, Stearinsäure, Isostearinsäure, ölsäure, Ricinolsäure und 12-Hydroxystearinsäure. Ferner kommen Dihydroxysäuren oder Dimersäuren in Betracht. Üblicherweise können die Fettsäuren zur Herstellung der Partialester in Form ihrer technischen Gemische eingesetzt werden.

Die so erhältlichen, noch freie Hydroxygruppen enthaltenden Partialester können durch Anlagerung von Alkylenoxiden, wie Propylenoxid, Styroloxid, Butylenoxid modifiziert werden, wobei die Anlagerung verschiedener Alkylenoxide statistisch oder blockweise erfolgen kann. Besonders bevorzugt ist die Anlagerung von 3 bis 60 Mol Propylenoxid, insbesondere bevorzugt die Anlagerung von 10 bis 30 Mol Propylenoxid sowie 1 bis 10 Mol Styroloxid und/oder 1 bis 10 Mol Butylenoxid.

Die erfindungsgemäß zu verwendenden Partialester beinhalten naturgemäß auch Produkte, die dadurch erhältlich sind, daß man zunächst die als Startmaterial zugrunde liegenden Oligoglycerine alkoxyliert und nachfolgend die Veresterung mit entsprechenden Fettsäuren ausführt. Die Veretherungs- und Veresterungsreaktionskonditionen entsprechen dem Stand der Technik. Für die Veretherung eignen sich sowohl saure als auch basische Katalysatoren, bevorzugt sind Kaliumhydroxid, Kaliummethylat, Natriummethylat oder BF₃-Etherat. Die Verwendung von BF₃-Etherat ist insbesondere bevorzugt.

Es ist dem Fachmann geläufig, daß die Verbindungen in Form eines Gemisches mit einer im wesentlichen durch statistische Gesetze geregelten Verteilung vorliegen.

Die nun erfindungsgemäß zur Entschäumung von Polymerdispersionen und wäßrigen Lacksystemen zu verwendenden Compounds bestehen aus:
a) 85,0 bis 99,9 Gew.-Teilen eines alkoxylierten Partialesters von Oligoglycerinen mit C₈- bis C₂₂-Fettsäuren, wobei man 3 bis 60 Mol Propylenoxid und gegebenenfalls 1 bis 10 Mol Styroloxid und/oder 1 bis 10 Mol Butylenoxid einsetzt,
b) 0,1 bis 15,0 Gew.-Teilen eines anorganischen oder organischen Feststoffes.

Beispiele anorganischer Feststoffe sind ggf. hydrophobierte Kieselsäuren, Metallseifen, Aluminiumoxid, Erdalkalicarbonate oder ähnliche aus dem Stand der Technik bekannte und übliche feinteilige Feststoffe. Als organische feinteilige Substanzen können für diesen Zweck bekannte Erdalkalisalze von langkettigen Fettsäuren mit 12 bis 22 Kohlenstoffatomen, die Amide dieser Fettsäuren, mikronisierte Wachse oder in situ erzeugte Oligoharnstoffe verwendet werden.

Die erfindungsgemäßen Zubereitungen können als solche oder in Form wäßriger Emulsionen verwendet werden. Dabei wird die Verwendung von Emulsionen aufgrund der besseren Dosierungsmöglichkeiten bevorzugt. Besonders bevorzugt sind Entschäumeremulsionen, deren mittlere Teilchengröße zwischen 1 und 10 µm liegt. Man verwendet insbesondere wäßrige Emulsionen mit einem Gehalt von 5 bis 50 % der erfindungsgemäßen Zubereitungen.

Die erfindungsgemäßen Compounds werden den Polymerdispersionen und wäßrigen Lacksystemen in Mengen von 0,01 bis 3 Gew.-% zugesetzt.

Beispiele erfindungsgemäßer und in den Entschäumercompounds besonders geeigneter Partialester von Oligoglyceriden sind:
A) Alkoxylierungsprodukt aus Triglycerintrilaurat + 30 Mol Propylenoxid + 3 Mol Styroloxid + 3 Mol Butylenoxid
B) Alkoxylierungsprodukt aus Pentaglycerinpentaoleat + 50 Mol Propylenoxid + 5 Mol Butylenoxid
C) Alkoxylierungsprodukt aus Pentaglycerinpentalaurat + 50 Mol Propylenoxid + 5 Mol Styroloxid

Nichterfindungsgemäße, zu Vergleichszwecken untersuchte Verbindungen sind:
D) Alkoxylierungsprodukt aus Triglycerintrioleat + 20 Mol Propylenoxid + 20 Mol Ethylenoxid
E) Alkoxylierungsprodukt aus Pentaglycerinpentaoleat + 30 Mol Propylenoxid + 5 Mol Ethylenoxid
F) Triglycerintriacetat
G) Polypropylenglycol aus 50 Mol Propylenoxid

Diese erfindungsgemäßen und nichterfindungsgemäßen Verbindungen werden mit jeweils 3 Gew.-% Sipernat D10 (hydrophobe Kieselsäure, Fa. Degussa) zu den jeweiligen Entschäumercompounds A bis G formuliert.

Im folgenden werden die anwendungstechnischen Eigenschaften der verschiedenen erfindungsgemäßen Compounds sowie der Vergleichsbeispiele gezeigt.

Die Überprüfung der anwendungstechnischen Eigenschaften erfolgt in zwei kommerziell erhältlichen Polymerdispersionen, einer Dispersionsfarbe sowie einer wasserbasierenden Flexodruckfarbe.

Folgende Testsysteme sind ausgewählt worden:
a. Styrolacrylatdispersion Acronal 290 D, Fa. BASF
b. Reinacrylatdispersion Acronal A603, Fa. BASF
c. Eine Dispersionsfarbe wird auf übliche Weise gemäß nachstehender Rezeptur formuliert (Mengenangaben in Gew.-%):

| | | |
|---|---|---|
| Propylenglycol | 4,8 | |
| Collacral AS35 | 5,0 | BASF, Netz- und Dispergiermittel |
| Titandioxid | 23,2 | |
| Mergal K7 | 0,2 | Riedel de Haen, Konservierungsmittel |
| Butylglycol | 2,6 | |
| Dowanol DPM | 1,4 | |
| Wasser | 6,9 | |
| Acronal A603 | 54,3 | BASF, Reinacrylatdispersion |
| Rheolate 278 | 4,0 | Rheox, Verdicker |

d. Eine Flexodruckfarbe wird auf übliche Weise gemäß nachstehender Rezeptur formuliert (Mengenangaben in Gew.-%):

| Mahlgut: | | |
|---|---|---|
| Joncryl 81 | 18,7 | Acrylatharzlösung, Johnson-Polymer |
| Foamex 840 | 0,1 | Entschäumer, Tego Chemie Service |
| Wasser | 7,5 | |
| Heliogenblau | D7080 11,2 | Phthalocyaninblau, BASF |
| 1 Stunde Dispergierung (Gerät: Scandex) | | |

| Auflackung: | | |
|---|---|---|
| Joncryl 8051 | 46,2 | Acrylatdispersion, Johnson-Polymer |
| Jonwax 35 | 4,7 | Polyethylen-Wachsemulsion, Johnson-Polymer |
| Wasser | 6,8 | |
| Isopropanol | 4,7 | |
| 5 Minuten Dispergierung (Gerät: Scandex) | | |

Als letzter Rezepturbestandteil werden jeweils 0,2 % der erfindungsgemäßen und nichterfindungsgemäßen Entschäumercompounds hinzugegeben. Dabei erfolgt die Einarbeitung eine Minute bei 1000 U/min.

### Schaumtest (für a. und b.)

In die mit 0,2 Gew.-% Entschäumercompound additivierten Polymerdispersionen wird 1 Minute mit 2500 U/min mittels eines Turbinenrührers (Durchmesser 4 cm) Luft eindispergiert. Die so bearbeitete Dispersion wird dann, unmittelbar nach Abstellen des Rührers, in eine Mensur bis zur Eichmarke von 50 ml gefüllt und gewogen. Das Gewicht wird durch die eingerührte Luftmenge beeinflußt und ist ein Maß für die Wirksamkeit des Entschäumers.

### Schaumtest (für d.)

50 g der mit 0,2 Gew.-% Entschäumercompound additivierten, wäßrigen Flexodruckfarbe werden in ein 150-ml-Becherglas eingewogen und eine Minute bei 2500 U/min mit einer Dissolverscheibe (3 cm Durchmesser) geschert. Anschließend werden 45 g in einen Standzylinder eingewogen und die Schaumhöhe in ml angegeben.

### Rollentest (für c.)

Beim Rollentest werden mittels einer offenporigen Schaumrolle 40 g der zu untersuchenden Dispersionsfarbe auf einer nichtsaugenden Prüfkarte mit einer Gesamtfläche von 500 cm² verteilt. Die Schaumstoffrolle wird vor der Farbapplikation mit Wasser benetzt. Es wird dabei sichergestellt, daß immer die gleiche zusätzliche Wassermenge in die vorgelegte Farbe eingebracht wird und damit die Trocknungszeit des Lackes stets gleich bleibt. Die Naßfilmauflage beträgt ca. 300 g/m² Fläche. Nach 24stündigem Trocknen des Films werden die Prüftafeln hinsichtlich des vorhandenen Makroschaums (Zahl der Blasen auf 100 cm²), hinsichtlich des vorhandenen Mikroschaums (Zahl der Nadelstiche durch Vergleich mit Prüftafeln mit verschieden stark ausgeprägten Störungsbildern, Skala von 1 (sehr gut) bis 5 (mangelhaft, viele Nadelstiche)) sowie hinsichtlich etwaiger Benetzungsdefekte bewertet.

Folgende Ergebnisse zeugen von der breiten Einsetzbarkeit der erfindungsgemäßen Entschäumercompounds

**Tabelle 1**

| **Ergebnisse des Schaumtestes für Styrolacrylat-dispersion a** | | |
|---|---|---|
| Compound | Konzentration | Probendichte x g/50 ml |
| | | |
| Nullprobe | 0 | 39,2 |
| A | 0,2 | 49,7 |
| B | 0,2 | 49,8 |
| C | 0,2 | 50,1 |
| | | |
| D | 0,2 | 47,6 |
| E | 0,2 | 46,2 |
| F | 0,2 | 39,6 |
| F | 0,5 | 40,1 |
| G | 0,2 | 44,3 |
| G | 0,5 | 48,2 |

**Tabelle 2**

| **Ergebnisse des Schaumtestes für Reinacrylat-dispersion b** | | |
|---|---|---|
| Compound | Konzentration | Probendichte x g/50 ml |
| | | |
| Nullprobe | 0 | 38 |
| A | 0,2 | 48,9 |
| B | 0,2 | 49,1 |
| C | 0,2 | 49,3 |
| | | |
| D | 0,2 | 45,1 |
| E | 0,2 | 44,3 |
| F | 0,2 | 38,9 |
| F | 0,5 | 40,2 |
| G | 0,2 | 45,1 |
| G | 0,5 | 47,9 |

**Tabelle 3**

| **Ergebnisse des Rollentestes für Dispersionsfarbe c** | | | | |
|---|---|---|---|---|
| Compound | Konzentration | Makroschaum | Mikroschaum | Benetzungsfehler |
| | | | | |
| Nullprobe | 0 | 80 | 5 | keine |
| A | 0,2 | 0 | 1 | keine |
| B | 0,2 | 0 | 1 | keine |
| C | 0,2 | 0 | 1 | keine |
| | | | | |
| D | 0,2 | 5 | 2 | keine |
| E | 0,2 | 7 | 3 | gering |
| F | 0,2 | 72 | 5 | keine |
| F | 0,5 | 65 | 5 | keine |
| G | 0,2 | 10 | 2 | keine |
| G | 0,5 | 3 | 2 | gering |

**Tabelle 4**

| **Ergebnisse des Schaumtestes für** | | |
|---|---|---|
| | **Flexodruckfarbe d** | |
| Compound | Konzentration | Schaumwert in ml/45 g |
| | | |
| Nullprobe | 0 | 62 |
| A | 0,2 | 46 |
| B | 0,2 | 47 |
| C | 0,2 | 45 |
| | | |
| D | 0,2 | 52 |
| E | 0,2 | 50 |
| F | 0,2 | 62 |
| F | 0,5 | 65 |
| G | 0,2 | 53 |
| G | 0,5 | 49 |

## Patentansprüche

1. Entschäumercompounds zur Entschäumung von Polymerdispersionen und wäßrigen Lacksystemen, bestehend aus
a) 85,0 bis 99,9 Gew.-Teilen eines alkoxylierten Partialesters von Oligoglycerinen mit C₈- bis C₂₂-Fettsäuren, wobei man 3 bis 60 Mol Propylenoxid und gegebenenfalls 1 bis 10 Mol Styroloxid und/oder 1 bis 10 Mol Butylenoxid einsetzt,
b) 0,1 bis 15,0 Gew.-Teilen eines anorganischen oder organischen Feststoffes.

2. Entschäumercompounds gemäß Anspruch 1, **dadurch gekennzeichnet, daß** die Partialester aus durch Kondensation von 2 bis 10 Glycerinmolekülen erhältlichen Oligoglycerinen und C₈- bis C₂₂-Fettsäuren gebildet sind.

3. Entschäumercompounds gemäß Anspruch 1 bis 2 in Form einer wäßrigen Emulsion.

4. Entschäumercompounds gemäß Anspruch 3, **dadurch gekennzeichnet, daß** die mittlere Tröpfchengröße der Emulsion zwischen 1 und 10 µm liegt.

## Claims

1. Compound antifoam formulations for defoaming polymer dispersions and aqueous coating systems, consisting of
a) from 85.0 to 99.9 parts by weight of an alkoxylated partial ester of oligoglycerols with C₈ to C₂₂ fatty acids, using from 3 to 60 mol of propylene oxide and, if desired, from 1 to 10 mol of styrene oxide and/or from 1 to 10 mol of butylene oxide,
b) from 0.1 to 15.0 parts by weight of an inorganic or organic solid.

2. Compound antifoam formulations according to Claim 1, **characterized in that** the partial esters are formed from oligoglycerols, obtainable by condensation of 2 to 10 glycerol molecules, and C₈ to C₂₂ fatty acids.

3. Compound antifoam formulations according to Claim 1 or 2 in the form of an aqueous emulsion.

4. Compound antifoam formulations according to Claim 3, **characterized in that** the average droplet size of the emulsion lies between 1 and 10 µm.

## Revendications

1. Compositions antimousses pour le démoussage de dispersions de polymères et de systèmes de revêtement aqueux, constituées de
a) de 85,0 à 99,9 parties en poids d'un ester partiel alcoxylé d'oligoglycérols avec des acides gras en C₈ à C₂₂, où l'on met en oeuvre de 3 à 60 moles d'oxyde de propylène et éventuellement de 1 à 10 moles d'oxyde de styrène et/ou de 1 à 10 moles d'oxyde de butylène,
b) de 0,1 à 15,0 parties en poids d'un solide inorganique ou organique.

2. Compositions antimousses selon la revendication 1, **caractérisées en ce que** les esters partiels sont formés d'oligoglycérols que l'on peut obtenir par condensation de 2 à 10 molécules de glycérol et d'acides gras en C₈ à C₂₂.

3. Compositions antimousses selon les revendications 1 à 2 sous forme d'une émulsion aqueuse.

4. Compositions antimousses selon la revendication 3, **caractérisées en ce que** la taille moyenne des gouttelettes de l'émulsion se situe entre 1 et 10 µm.
